# EUROPEAN PATENT APPLICATION

(11) **EP 4 328 337 A1**
(43) Date of publication of application: **28.02.2024**
(21) Application number: 23190267.7
(22) Date of filing: 08.08.2023
(51) Int. Cl.: C22B 3/16, C01G 53/00, C22B 3/40, C22B 3/00, C01G 53/10

(54) **METHOD FOR RECYCLING HYDROPHOBIC DEEP EUTECTIC SOLVENT AND NICKEL LEACHING METHOD**

(30) Priority: 26.08.2022 JP 2022135181
(71) Applicant: Prime Planet Energy & Solutions, Inc., Chuo-ku Tokyo 103-0022 (JP); Kyushu University, National University Corporation, Fukuoka-shi, Fukuoka 819-0395 (JP); Toyota Tsusho Corporation, Nagoya-shi Aichi-ken 450-8575 (JP); TOYOTA JIDOSHA KABUSHIKI KAISHA, Toyota-shi, Aichi-ken, 471 8571 (JP)
(72) Inventor: YAMAMOTO, Yuji, Tokyo, 103-0022 (JP); GOTO, Masahiro, Fukuoka-ken, 819-0395 (JP); HANADA, Takafumi, Fukuoka-ken, 819-0395 (JP); MORIYAMA, Takeru, Aichi-ken, 450-8575 (JP); PROCTER, Momoko, Aichi-ken, 471-8571 (JP)
(74) Representative: Kuhnen & Wacker Patent- und Rechtsanwaltsbüro PartG mbB

(57) **Abstract**

Provided is a method for enabling recovery of metal element leaching capacity of a deep eutectic solvent used for leaching a metal element from an ore containing the metal element. A method for recycling a hydrophobic deep eutectic solvent disclosed here includes: preparing a hydrophobic deep eutectic solvent used for leaching a metal element from an ore containing the metal element; and bringing the hydrophobic deep eutectic solvent and hydrochloric acid into contact with each other. In the hydrophobic deep eutectic solvent, a hydrogen bond donor is a carboxy group-containing compound, and a hydrogen bond acceptor is chloride salt. The amount of use of the hydrochloric acid is such that hydrogen chloride is 1 mole or more with respect to 1 mole of the hydrogen bond acceptor.

## Description

### TECHNICAL FIELD

The present disclosure relates to a method for recycling a hydrophobic deep eutectic solvent used for leaching a metal element from an ore containing the metal element. The present disclosure also relates to a nickel leaching method using the recycling method described above.

### BACKGROUND ART

There have been increasing demands for various metals in recent years. For example, a lithium composite oxide including a transition metal such as Ni, Co, or Mn is used for a positive electrode active material of a lithium ion secondary battery, and with widespread use of lithium ion secondary batteries, there has been an increasing demand for transition metal elements. Therefore, methods for obtaining sources for various metal elements including transition metal elements have been developed.

A known such method is to leach a metal element by using a deep eutectic solvent from an ore containing the metal element (see, for example, Non-patent Document 1).

### CITATION LIST

Non-patent Document 1: Gawen R.T.Jenkin et al., "The application of deep eutectic solvent ionic liquids for environmentally-friendly dissolution and recovery of precious metals", Minerals Engineering, Volume 87, 1 March 2016, Pages 18-24

### SUMMARY OF THE INVENTION

A result of intensive studies by the inventors of the present disclosure has revealed that when a metal element is leached from an ore by using a deep eutectic solvent in which a hydrogen bond donor is a carboxy group-containing compound and a hydrogen bond acceptor is a chloride salt, the collected used deep eutectic solvent has significantly degraded metal element leaching capacity. The deep eutectic solvent with significantly degraded metal element leaching capacity cannot be reused and becomes waste, which is problematic.

On the other hand, among transition metal elements, nickel is used for materials such as stainless steel and special steel other than a positive electrode active material of a lithium ion secondary battery, and demands for these materials have also increased. Therefore, demands for nickel is soaring, and a method for obtaining a nickel source has increased importance.

It is therefore an object of the present disclosure to provide a method for enabling recovery of metal element leaching capacity of a deep eutectic solvent used for leaching a metal element from an ore containing the metal element. It is another object of the present disclosure to provide a new method for leaching nickel.

A method for recycling a hydrophobic deep eutectic solvent disclosed here includes: preparing a hydrophobic deep eutectic solvent used for leaching a metal element from an ore containing the metal element; and bringing the hydrophobic deep eutectic solvent and hydrochloric acid into contact with each other. In the hydrophobic deep eutectic solvent, a hydrogen bond donor is a carboxy group-containing compound, and a hydrogen bond acceptor is chloride salt. An amount of use of the hydrochloric acid is such that hydrogen chloride is 1 mole or more with respect to 1 mole of the hydrogen bond acceptor.

According to this method, it is possible to recover metal element leaching capacity of the deep eutectic solvent used for leaching a metal element from an ore containing the metal element.

A nickel leaching method disclosed here includes: obtaining a hydrophobic deep eutectic solvent by the method for recycling a hydrophobic deep eutectic solvent disclosed here; and bringing the recycled hydrophobic deep eutectic solvent and a nickel ore into contact with each other.

According to this method, a new nickel leaching method is provided.

### BRIEF DESCRIPTION OF THE DRAWINGS

FIG. 1 is a flowchart depicting steps of a method for recycling a hydrophobic deep eutectic solvent according to the present disclosure.
FIG. 2 is a flowchart depicting steps of a nickel leaching method and a method for producing nickel sulfate, which are utilizing the method for recycling a hydrophobic deep eutectic solvent according to the present disclosure.

### DETAILED DESCRIPTION OF THE PREFERRED EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and a common general knowledge in the field. A numerical range expressed as "A to B" herein includes A and B.

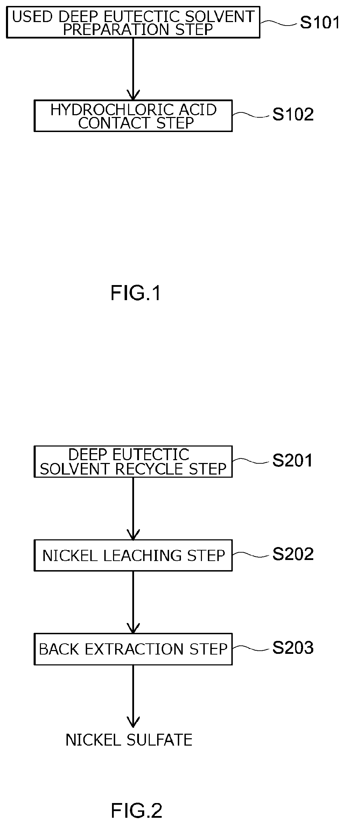

As illustrated in FIG. 1, a method for recycling a hydrophobic deep eutectic solvent according to this embodiment includes: step S101 of preparing a hydrophobic deep eutectic solvent used for leaching a metal element from an ore containing the metal element (hereinafter also referred to as a "used deep eutectic solvent preparation step"); and step S102 of bringing the hydrophobic deep eutectic solvent and hydrochloric acid into contact with each other (hereinafter also referred to as a "hydrochloric acid contact step"). In the hydrophobic deep eutectic solvent, a hydrogen bond donor is a carboxy group-containing compound, and a hydrogen bond acceptor is a chloride salt. The amount of use of the hydrochloric acid is such that the amount of hydrogen chloride is 1 mole or more with respect to 1 mole of the hydrogen bond acceptor.

First, used deep eutectic solvent preparation step S101 will be described. In step S101, an operator may prepare a hydrophobic deep eutectic solvent by leaching a metal element from an ore containing the metal element by himself/herself, or may obtain a hydrophobic deep eutectic solvent with which a metal element is leached from an ore containing the metal element by another person.

The metal element contained in the ore is not particularly limited as long as the metal element can be leached with a hydrophobic deep eutectic solvent. Examples of the metal element include alkali metals (e.g., Li, Na, and K), alkali earth metals (e.g., Mg, Ca, Sr, and Ba), and transition metals (e.g., first transition element, second transition element, and third transition element). Among these metals, from the viewpoint of applicability to a positive electrode active material of a lithium ion secondary battery, the metal element is desirably Li, Ni, Co, or Mn, and more desirably Ni. From the viewpoint of applicability to various catalysts such as an exhaust gas purification catalyst for an automobile, the metal element is desirably a precious metal (especially Pt, Pd, or Rh).

The ore containing the metal element is not particularly limited, and examples of the ore include gold ore, silver ore, copper ore, lead ore, tin ore, antimony ore, zinc ore, iron ore, iron sulfide ore, chromium iron ore, manganese ore, tungsten ore, molybdenum ore, nickel ore, and cobalt ore, and among these ores, nickel ore, cobalt ore, and manganese ore are desirable, and nickel ore is more desirable. The nickel ore is desirably nickel oxide ore (e.g., limonite ore or saprolite ore).

In this embodiment, as the hydrophobic deep eutectic solvent, one in which a hydrogen bond donor is a carboxy group-containing compound, and a hydrogen bond acceptor is a chloride salt is used.

The "deep eutectic solvent" herein refers to a solvent that is liquid at 25°C and is a mixture including a hydrogen bond donor and a hydrogen bond acceptor at least one of which is solid at 25°C. Specifically, although the deep eutectic solvent includes a material that is solid at 25°C, eutectic melting point drop is caused by mixing the hydrogen bond donor and the hydrogen bond acceptor at a predetermined mixture ratio so that the deep eutectic solvent is liquid at 25°C. The deep eutectic solvent is not composed only of ions because of inclusion of the hydrogen bond donor, and thus, is different from ionic liquid in a strict sense. The deep eutectic solvent is advantageous in easiness of being constituted by a material having a low environmental load, as compared to ionic liquid.

The "hydrophobic deep eutectic solvent" herein refers to a deep eutectic solvent that causes phase separation between an aqueous phase and a hydrophobic deep eutectic solvent phase when the deep eutectic solvent is in contact with water at 25°C. A solubility of the hydrophobic deep eutectic solvent in water at 25°C is desirably 1 g/100 mL or less, more desirably 0.1 g/100 mL or less, and even more desirably 0.01 g/100 mL or less.

Examples of the carboxy group-containing compound as the hydrogen bond donor include: fatty acids such as formic acid, acetic acid, butanoic acid, pentanoic acid, hexanoic acid, heptanoic acid, octanoic acid, nonanoic acid, decanoic acid, dodecanoic acid, tetradecanoic acid, pentadecanoic acid, hexadecanoic acid, heptadecanoic acid, octadecanoic acid, eicosanoic acid, docosanoic acid, tetracosanoic acid, hexacosanoic acid, octacosanoic acid, and triacontanoic acid; polyvalent carboxylic acid compounds such as oxalic acid, malonic acid, succinic acid, adipic acid, itaconic acid, suberic acid, and 1,2,3-propanetricarboxylic acid; aromatic carboxylic acid compounds such as benzoic acid; aromatic compounds having carboxy group-containing substituents such as phenylacetic acid, 3-phenyl propionic acid, and trans-cinnamic acid; levulinic acid; and carboxy group-containing compounds having a hydroxy group such as lactic acid, tartaric acid, ascorbic acid, citric acid, 4-hydroxy benzoic acid, p-coumaric acid, caffeic acid, and gallic acid.

These materials may be used alone or two or more of them may be used in combination as the hydrogen bond donor.

The hydrogen bond donor is desirably fatty acid, more desirably fatty acid having 8 to 12 carbon atoms, and even more desirably decanoic acid.

Examples of the chloride salt as the hydrogen bond acceptor include quaternary ammonium chloride, quaternary phosphonium chloride, tertiary ammonium chloride, and primary ammonium chloride.

Examples of quaternary ammonium chloride include choline chloride, tetrabutylammonium chloride, tetraethylammonium chloride, tetramethylammonium chloride, methyltrioctylammonium chloride, tetraoctylammonium chloride, acetyl choline chloride, chloro choline chloride, fluorocholine chloride, and N-(2-hydroxyethyl)-N,N-dimethyl benzenemethanaminium chloride.

Examples of quaternary phosphonium chloride include methyltriphenylphosphonium chloride, and benzyltriphenylphosphonium chloride.

Examples of tertiary ammonium chloride include 2-(diethylamino)ethanol hydrochloride.

Examples of primary ammonium chloride include ethylamine hydrochloride (ethylammonium chloride).

These materials may be used alone or two or more of them may be used in combination as the hydrogen bond acceptor.

The hydrogen bond acceptor is desirably quaternary ammonium chloride, and more desirably ammonium chloride including four alkyl groups having 1 to 8 carbon atoms.

It is especially desirable that in the hydrophobic deep eutectic solvent, the hydrogen bond donor is fatty acid and the hydrogen bond acceptor is quaternary ammonium chloride.

The hydrophobic deep eutectic solvent can be prepared by a known method. For example, the hydrogen bond donor and the hydrogen bond acceptor may be dry blended, and stirred or kneaded at a eutectic point of the hydrophobic deep eutectic solvent or higher to thereby prepare a hydrophobic deep eutectic solvent. Alternatively, a hydrophobic deep eutectic solvent may be prepared by dissolving the hydrogen bond donor and the hydrogen bond acceptor in a solvent and then removing the solvent.

The solvent prepared in step S101 is a hydrophobic deep eutectic solvent used for leaching a metal element from an ore containing the metal element (hereinafter also referred to as a "used hydrophobic deep eutectic solvent"). The leaching of the metal element from the ore containing the metal element can be performed by bringing the ore into contact with the hydrophobic deep eutectic solvent. Thus, the used hydrophobic deep eutectic solvent has been subj ected to contact with the ore. The contact between the ore and the hydrophobic deep eutectic solvent can be typically performed by immersing the ore in the hydrophobic deep eutectic solvent. In the contact, stirring, heating, ultrasonic wave application, and other operations may be performed in order to enhance immersion efficiency.

The leaching of the metal element from the ore may employ a component other than the hydrophobic deep eutectic solvent (e.g., acid, oxidizing agent, etc.).

The used hydrophobic deep eutectic solvent may include an ore containing a metal element, and desirably does not include an ore containing a metal element. Thus, the used hydrophobic deep eutectic solvent is desirably a solvent from which an ore containing a metal element is removed by solid-liquid separation such as filtration.

The used hydrophobic deep eutectic solvent may or may not include a leached metal element. Accordingly, the used hydrophobic deep eutectic solvent may be a solvent from which a leached metal element is collected. Thus, the used hydrophobic deep eutectic solvent may be a solvent subjected to a further process of separating a specific metal element (e.g., extraction with an acid aqueous solution) in addition to the process of leaching a metal element described above.

Next, hydrochloric acid contact step S102 will be described. As a result of intensive studies, the inventors of the present disclosure have envisaged that degradation of metal element leaching capacity of the used hydrophobic deep eutectic solvent is caused by consumption of hydrogen chloride (HCl) during leaching a metal element from an ore. In view of this, step S102 is performed so that the used deep eutectic solvent is brought into contact with hydrochloric acid to supplement the used deep eutectic solvent with hydrogen chloride (HCl). According to this, metal element leaching capacity of the used deep eutectic solvent can be recovered.

Hydrochloric acid is an aqueous solution of hydrogen chloride. The amount of use of hydrochloric acid is such that the amount of hydrogen chloride is 1 mole or more with respect to 1 mole of the hydrogen bond acceptor of the hydrophobic deep eutectic solvent. In the case of such an amount, metal element leaching capacity of the used hydrophobic deep eutectic solvent can be significantly recovered. From the viewpoint of further recovering metal element leaching capacity of the used hydrophobic deep eutectic solvent, the amount of use of hydrochloric acid is such that hydrogen chloride is desirably 1.5 moles or more, more desirably 1.8 moles or more, and even more desirably 2 moles or more, with respect to 1 mole of the hydrogen bond acceptor of the hydrophobic deep eutectic solvent. The upper limit of the amount of use of hydrochloric acid is not particularly limited. From the viewpoint of avoiding excessive use of hydrochloric acid, the amount of use of hydrochloric acid is such that hydrogen chloride is desirably 50 moles or less, more desirably 30 moles or less, and even more desirably 10 moles or less with respect to 1 mole of the hydrogen bond acceptor of the hydrophobic deep eutectic solvent.

In step S102, the method for bringing the hydrophobic deep eutectic solvent and hydrochloric acid into contact with each other is not particularly limited. Examples of the contact method include mixing of the hydrophobic deep eutectic solvent and hydrochloric acid. In this case, since the hydrophobic deep eutectic solvent and the hydrochloric acid are not generally compatible, phase separation occurs. Hydrogen chloride included in hydrochloric acid moves to a hydrophobic deep eutectic solvent phase, and is supplied to the hydrophobic deep eutectic solvent.

To increase efficiency of movement of hydrogen chloride, a mixture of the hydrophobic deep eutectic solvent and hydrochloric acid may be shaken or stirred with a known device such as a shaker or a stirring device for use in liquid-liquid extraction. Alternatively, a known emulsion flow device may be used for the contact between the hydrophobic deep eutectic solvent and hydrochloric acid.

The contact temperature and the contact time are appropriately determined depending on the contact method. The contact temperature may be room temperature (e.g., 25°C±10°C), and the hydrophobic deep eutectic solvent and hydrochloric acid may be brought into contact at a temperature higher than 35°C and less than a boiling point of hydrochloric acid. The contact time is, for example, 1 minute to 120 hours, and desirably 30 minutes to 24 hours.

After the contact, the hydrophobic deep eutectic solvent phase is collected, thereby obtaining a hydrophobic deep eutectic solvent that is recycled (i.e., has recovered metal element leaching capacity). Thus, the method for recycling a hydrophobic deep eutectic solvent according to this embodiment can recover metal element leaching capacity of a deep eutectic solvent used for leaching a metal element from an ore containing the metal element.

The recycled hydrophobic deep eutectic solvent can be used for leaching a metal element again. The hydrophobic deep eutectic solvent used for leaching a metal element again can be recycled again by performing step S102. Thus, the method for recycling a hydrophobic deep eutectic solvent according to this embodiment enables repetitive use of the hydrophobic deep eutectic solvent for leaching a metal element from an ore containing the metal element. As a result, it is possible to avoid the hydrophobic deep eutectic solvent from becoming a waste, which is advantageous in terms of environment, costs, and other aspects.

As described above, the demand for nickel is rapidly increasing, and the importance of a method for obtaining a nickel source is increasing. In view of this, in another aspect, a nickel leaching method according to this embodiment includes: step S201 of obtaining a recycled hydrophobic deep eutectic solvent (hereinafter referred to as a "deep eutectic solvent recycle step") by the method for recycling a hydrophobic deep eutectic solvent described above; and step S202 of bringing the recycled hydrophobic deep eutectic solvent and a nickel ore into contact with each other (hereinafter referred to as a "nickel leaching step"). Step S201 and step 202 in FIG. 2 are steps included in a nickel leaching method according to this embodiment.

Deep eutectic solvent recycle step S201 can be carried out by performing used deep eutectic solvent preparation step S101 and hydrochloric acid contact step S102 described above.

The nickel ore for use in nickel leaching step S202 is desirably a nickel oxide ore, but is not limited to the nickel oxide ore. The nickel oxide ore is not particularly limited as long as the nickel oxide ore is an oxide ore containing nickel. Examples of the nickel oxide ore include a limonite ore and a saprolite ore. The nickel oxide ore typically contains nickel oxide (NiO) and iron oxide (Fe₂O₃) as constituents.

The nickel ore may have been subjected to processes such as pulverization and classification. By performing the processes such as pulverization and classification on the nickel ore, the particle size of the nickel ore can be adjusted to a predetermined range (e.g., a median particle diameter D50 determined by a laser diffraction/scattering method of 0.01 to 1000 µm, desirably 1 to 100 µm), thereby enhancing leaching efficiency. The processes such as pulverization or classification can be performed in accordance with known methods.

The amount of use of the hydrophobic deep eutectic solvent with respect to the nickel ore is not particularly limited. The amount of use of the hydrophobic deep eutectic solvent with respect to 100 parts by mass of the nickel ore is, for example, 10 to 100000 parts by mass, desirably 100 to 10000 parts by mass.

The contact between the nickel ore and the hydrophobic deep eutectic solvent can be performed in accordance with a known method. For example, the contact can be carried out by feeding the nickel ore and the hydrophobic deep eutectic solvent into a vessel so that the nickel ore is immersed in the hydrophobic deep eutectic solvent.

In bringing the nickel ore and the hydrophobic deep eutectic solvent into contact with each other, a mixture of the nickel ore and the hydrophobic deep eutectic solvent may be stirred. The stirring can be performed by a known method (e.g., method using a stirring device including a stirrer, a stirring impeller or the like). In bringing the nickel ore and the hydrophobic deep eutectic solvent into contact with each other, ultrasonic waves may be applied.

The contact between the nickel ore and the hydrophobic deep eutectic solvent can be performed at room temperature (specifically, 25°C). From the viewpoint of increasing a leaching rate, heating may be performed in bringing the nickel ore and the hydrophobic deep eutectic solvent into contact with each other. The heating may be performed on the vessel by a known means, such as an oil bath, a mantle heater, a band heater (e.g., ribbon heater), or a plane heater (e.g., film heater or silicon rubber heater). The heating temperature is not specifically limited, and is desirably 40°C or more, more desirably 50°C or more, and even more desirably 60°C or more. On the other hand, from the viewpoint of energy efficiency, the heating temperature is desirably 100°C or less, more desirably 80°C or less, and even more desirably 70°C or less.

In bringing the nickel ore and the hydrophobic deep eutectic solvent into contact with each other, pressurization may be performed. The pressurization may be performed in accordance with a known method.

The time in which the nickel ore and the hydrophobic deep eutectic solvent are brought into contact is not particularly limited, and can be appropriately determined depending on the type and amount of the hydrophobic deep eutectic solvent to be used, the particle size of the nickel ore, the temperature, and so forth. The time in which the nickel ore and the hydrophobic deep eutectic solvent are brought into contact is, for example, 1 minute to 100 hours, desirably 1 hour to 50 hours.

To increase the leaching rate of nickel, the nickel ore and the hydrophobic deep eutectic solvent may be brought into contact under the presence of organic acid. Organic acid can form a single phase (organic phase) when being mixed with the hydrophobic deep eutectic solvent.

The organic acid is desirably strong acid. The "strong acid" herein refers to acid having a pKa less than zero. Desired examples of the strong acid include organic sulfonic acid compounds such as methanesulfonic acid (pKa = -1.9), benzenesulfonic acid (pKa = -2.8), and p-toluenesulfonic acid (pKa = -2.8).

The proportion of the organic acid with respect to the deep eutectic solvent is not specifically limited. The mass proportion of the organic acid with respect to the hydrophobic deep eutectic solvent is, for example, 6 mass% or more, desirably 7 mass% or more, more desirably 8 mass% or more, much more desirably 9 mass% or more, and further more desirably 10 mass% or more. On the other hand, the mass proportion of the organic acid with respect to the hydrophobic deep eutectic solvent is, for example, 30 mass% or less, desirably 25 mass% or less, and more desirably 20 mass% or less.

Within the range not significantly impairing advantages of the present disclosure (e.g., less than 10 mass%, less than 5 mass%, or less than 1 mass% with respect to the hydrophobic deep eutectic solvent), another component (e.g., water, a reducing agent, an oxidizing agent, organic solvents other than organic acid, various additives, etc.) may be used in bringing the nickel ore and the hydrophobic deep eutectic solvent into contact with each other.

After the contact, a hydrophobic deep eutectic solvent including leached nickel (i.e., nickel leachate) can be collected by a known solid-liquid separation method (e.g., filtration). Nickel can be extracted from the collected nickel leachate in accordance with a known method. The hydrophobic deep eutectic solvent from which nickel has been extracted can be used for the nickel leaching method according to this embodiment again.

The nickel leaching method according to this embodiment is novel, and the nickel leaching method according to this embodiment can be repeatedly performed by performing the step of extracting nickel from the nickel leachate and collecting the hydrophobic deep eutectic solvent. As a result, it is possible to avoid the hydrophobic deep eutectic solvent from becoming a waste, which is advantageous in terms of environment, costs, and other aspects.

For nickel extraction from the collected nickel leachate, step S203 of performing back extraction on the obtained nickel leachate by using sulfuric acid to obtain an aqueous phase containing nickel sulfate (hereinafter referred to as a "back extraction step") is performed so that nickel can be obtained as nickel sulfate.

Thus, a method including deep eutectic solvent recycle step S201, nickel leaching step S202, and back extraction step S203 is a method for producing nickel sulfate as illustrated in FIG. 2. Here, as a nickel source of a positive electrode active material of a lithium ion secondary battery, nickel sulfate is mainly used. Thus, the method for producing nickel sulfate has a high industrial value as a new method for obtaining nickel sulfate of a nickel source of a positive electrode active material of a lithium ion secondary battery.

Back extraction step S203 will now be described. In back extraction step S203, back extraction is performed by using sulfuric acid as an extraction solvent (i.e., aqueous phase). That is, nickel that has moved from the nickel ore to the hydrophobic deep eutectic solvent phase is allowed to move to the aqueous phase. Sulfuric acid also serves as an anion (SO₄²⁻) source of nickel sulfate.

The concentration of sulfuric acid is not specifically limited as long as nickel can move to the aqueous phase, and is, for example, 1 mol/L (1M) or more. Here, the nickel ore can include iron oxide (Fe₂O₃). In particular, the nickel oxide ore typically includes iron oxide. In back extraction step S203, the use of high-concentration sulfuric acid can suppress movement of Fe to the aqueous phase. That is, nickel sulfate with a small contamination of an iron component can be obtained. From this viewpoint, the concentration of sulfuric acid is desirably 1.5 mol/L or more, more desirably 2 mol/L or more, much more desirably 2.5 mol/L or more, and further more desirably 3 mol/L or more. The upper limit of the concentration of sulfuric acid is not specifically limited, and is determined by technical limitation. The concentration of sulfuric acid may be 15 mol/L or less, 10 mol/L or less, 7.5 mol/L or less, or 5 mol/L or less.

In this step, back extraction with sulfuric acid may be performed after the nickel leachate is diluted with a hydrophobic organic solvent. By diluting the nickel leachate with the organic solvent, movement of Fe to the aqueous phase can be suppressed, and nickel sulfate with a small contamination of an iron component can be obtained. In addition, this dilution enables adjustment of the viscosity of the nickel leachate, and thus, back extraction can be more easily performed, and productivity can also be enhanced. In particular, in a case where the nickel leachate (or hydrophobic deep eutectic solvent) has a high viscosity (e.g., a case where the hydrogen bond acceptor is tetrabutylammonium chloride), productivity can be further enhanced.

The hydrophobic organic solvent is desirably hydrocarbons, and examples of the hydrocarbons include aliphatic hydrocarbons such as hexane, heptane, octane, nonane, and decane, and aromatic hydrocarbons such as benzene and toluene. Among these, aromatic hydrocarbons are desirable, and toluene is more desirable.

The amount of use of the hydrophobic organic solvent is not particularly limited, and may be determined as appropriate depending on the viscosity of the leachate. The amount of use of the hydrophobic organic solvent is, for example, 1 to 100 vol.%, desirably 5 to 50 vol.%, with respect to the leachate.

The extractant (i.e., aqueous phase) may contain a component other than sulfuric acid within a range that does not significantly inhibit the effects of the present disclosure (e.g., less than 10 mass%, less than 5 mass%, or less than 1 mass%).

The amount of use of sulfuric acid to the nickel leachate is not particularly limited. Leachate : sulfuric acid (volume ratio) is, for example, 1 : 0.05 to 20, desirably 1 : 0.2 to 5.

The back extraction can be performed in accordance with a known method. After the back extraction, the aqueous phase is collected, thereby obtaining a solution containing nickel sulfate. From the solution containing nickel sulfate, nickel sulfate is crystallized and collected in accordance with a known method, thereby obtaining nickel sulfate.

For some applications of nickel sulfate, nickel sulfate may be collected in the state of an aqueous solution without precipitation of nickel sulfate from the solution containing nickel sulfate. In this case, the solution containing nickel sulfate may be used without change for an intended application, or may be used after a process such as neutralization.

According to the method for producing nickel sulfate described above, nickel sulfate can be obtained through simple operations. In addition, since the hydrophobic deep eutectic solvent can be reused, the amount of waste generation can be reduced.

### Examples

Examples of the present disclosure will now be described, but are not intended to limit the present disclosure to these examples.

### [Examples 1 to 3 and Comparative Examples 1 to 5]

### <Preparation of Used Hydrophobic Deep Eutectic Solvent>

A mixed solution in which decanoic acid as a hydrogen bond donor and trioctylmethylammonium chloride as a hydrogen bond acceptor were mixed at a volume ratio of 2 : 1 was placed in a vessel equipped with a stirring impeller. Then, 10 g/L of a nickel oxide ore was fed to the vessel and stirred at 60°C at a rotation speed of 400 rpm for 24 hours so that nickel was leached to a hydrophobic deep eutectic solvent. After a nickel oxide ore was collected by filtration, sulfuric acid with a concentration of 5 M (mol/L) was added to the filtrate (hydrophobic deep eutectic solvent) at a volume ratio of 1 : 1. The resultant was shaken for one hour, and leached nickel was allowed to move to the aqueous phase. Thereafter, a hydrophobic deep eutectic solvent phase was extracted, thereby collecting a hydrophobic deep eutectic solvent. On the other hand, the collected nickel oxide ore and the leachate were subjected to ICP analysis, and a Ni leaching amount was determined.

### <Recycle of Used Hydrophobic Deep Eutectic Solvent>

Next, a supplemental solution shown in Table 1 was supplied to the collected hydrophobic deep eutectic solvent at a volume ratio of 1 : 1. The resultant was shaken for 1 hour, and then, a hydrophobic deep eutectic solvent phase was extracted. In this manner, a hydrophobic deep eutectic solvent was collected. It should be noted that in Comparative Example 1, no recycle process using a supplemental solution was performed, and the collected hydrophobic deep eutectic solvent was supplied for next nickel re-leaching.

### <Nickel Re-leaching with Recycled Hydrophobic Deep Eutectic Solvent>

The collected hydrophobic deep eutectic solvent was placed in a vessel equipped with a stirring impeller, and 10 g/L of a nickel oxide ore was fed to the vessel again. The resulting mixture was stirred at 60°C at a rotation speed of 400 rpm for 24 hours, thereby leaching nickel to the hydrophobic deep eutectic solvent. The nickel oxide ore was collected by filtration, and the leachate and the collected nickel oxide ore were subjected to ICP analysis, thereby determining a Ni leaching amount. As a Ni re-leaching rate, a proportion (%) of the Ni leaching amount in re-leaching to the Ni leaching amount in first leaching was calculated. Table 1 shows the results.

### [Table 1]

**Table 1**

| | Supplemental Solution | Mole Ratio to Hydrogen Bond Acceptor | Ni Re-leaching Rate (%) |
|---|---|---|---|
| Comparative Example 1 | not used | - | 10 |
| Comparative Example 2 | 4M NaCl(aq) | 1.6 | 1 |
| Comparative Example 3 | 2.5M H₂SO₄(aq) | 1 | 7 |
| Comparative Example 4 | 0.1M HCl(aq) | 0.04 | 5 |
| Comparative Example 5 | 1M HCl(aq) | 0.4 | 3 |
| Example 1 | 2.5M HCl(aq) | 1 | 50 |
| Example 2 | 5M HCl(aq) | 2 | 100 |
| Example 3 | 10M HCl(aq) | 4 | 100 |

Comparative Example 1 is an example in which no recycle of the used hydrophobic deep eutectic solvent was performed. In the case of performing no recycle, Ni leaching capacity of the hydrophobic deep eutectic solvent significantly degraded, and the Ni releaching rate was only 10%. On the other hand, in Comparative Example 2, a NaCl aqueous solution was used, and only Cl⁻ was supplied to the used hydrophobic deep eutectic solvent, but the Ni releaching rate further decreased. In Comparative Example 3, sulfuric acid was used, and only H⁺ was supplied to the used hydrophobic deep eutectic solvent, but the Ni releaching rate further decreased.

On the other hand, in Comparative Examples 4 and 5 and Examples 1 to 3, hydrochloric acid was used, and H⁺ and Cl⁻ were supplied to the used hydrophobic deep eutectic solvent. The results of Table 1 show that Example 1 in which the molar ratio of hydrogen chloride to the hydrogen bond acceptor of the hydrophobic deep eutectic solvent was 1 exhibited significantly improved the Ni releaching rate. In Example 2 in which the molar ratio was 2, the Ni releaching rate was 100%, and Ni leaching capacity was completely recovered.

The foregoing results show that the method for recycling a hydrophobic deep eutectic solvent disclosed here enables recovery of metal element leaching capacity of the deep eutectic solvent used for leaching the metal element from the ore containing the metal element.

Specific examples of the present disclosure have been described in detail hereinbefore, but are merely illustrative examples, and are not intended to limit the scope of claims. The techniques described in claims include various modifications and changes of the above exemplified specific examples.

That is, the method for recycling a hydrophobic deep eutectic solvent and a nickel leaching method disclosed here are items [1] to [4]:
[1] A method for recycling a hydrophobic deep eutectic solvent, the method including:
   preparing a hydrophobic deep eutectic solvent used for leaching a metal element from an ore containing the metal element; and
   bringing the hydrophobic deep eutectic solvent and hydrochloric acid into contact with each other, wherein
   in the hydrophobic deep eutectic solvent, a hydrogen bond donor is a carboxy group-containing compound, and a hydrogen bond acceptor is chloride salt, and
   an amount of use of the hydrochloric acid is such that hydrogen chloride is 1 mole or more with respect to 1 mole of the hydrogen bond acceptor.
[2] The method according to item [1] in which the amount of use of the hydrochloric acid is such that hydrogen chloride is 2 moles or more with respect to 1 mole of the hydrogen bond acceptor.
[3] The method according to item [1] or [2] in which the hydrogen bond donor is fatty acid, and the hydrogen bond acceptor is quaternary ammonium chloride.
[4] A nickel leaching method includes:
   obtaining a recycled hydrophobic deep eutectic solvent by the method for recycling a hydrophobic deep eutectic solvent according to any one of items [1] to [3]; and
   bringing the recycled hydrophobic deep eutectic solvent and a nickel ore into contact with each other.

## Claims

1. A method for recycling a hydrophobic deep eutectic solvent, the method comprising:
the step (101) of preparing a hydrophobic deep eutectic solvent used for leaching a metal element from an ore containing the metal element; and
the step (102) of bringing the hydrophobic deep eutectic solvent and hydrochloric acid into contact with each other, wherein
in the hydrophobic deep eutectic solvent, a hydrogen bond donor is a carboxy group-containing compound, and a hydrogen bond acceptor is chloride salt, and
an amount of use of the hydrochloric acid is such that hydrogen chloride is 1 mole or more with respect to 1 mole of the hydrogen bond acceptor.

2. The method according to claim 1, wherein the amount of use of the hydrochloric acid is such that hydrogen chloride is 2 moles or more with respect to 1 mole of the hydrogen bond acceptor.

3. The method according to claim 1, wherein the hydrogen bond donor is fatty acid, and the hydrogen bond acceptor is quaternary ammonium chloride.

4. A nickel leaching method comprising:
the step (201) of obtaining a recycled hydrophobic deep eutectic solvent by the method for recycling a hydrophobic deep eutectic solvent according to claim 1; and
the step (202) of bringing the recycled hydrophobic deep eutectic solvent and a nickel ore into contact with each other.
